# EUROPEAN PATENT SPECIFICATION

(11) **EP 3 288 749 B1**
(45) Date of publication and mention of the grant of the patent: **18.11.2020**
(21) Application number: 16723266.9
(22) Date of filing: 26.04.2016
(51) Int. Cl.: B29D 30/32

(54) **FOLDING ARM FOR A SIDEWALL BAND OF A TYRE, ARMS MECHANISM AND DRUM APPARATUS**
KLAPPARM FÜR SEITENWANDBAND EINES REIFENS, ARMMECHANISMUS UND TROMMELVORRICHTUNG
BRAS DE PLIAGE DESTINÉ À UNE BANDE DE PAROI LATÉRALE D'UN PNEUMATIQUE, MÉCANISMES DE BRAS ET APPAREIL À TAMBOUR

(30) Priority: 27.04.2015 IT RM20150178
(43) Date of publication of application: 07.03.2018
(73) Proprietor: Bridgestone Europe NV/SA, 1932 Zaventem (BE)
(72) Inventor: CAPPABIANCA, Claudio, 00128 Roma (IT)
(74) Representative: Marchetti, Alessio
(86) International application number: PCT/EP2016/059298
(87) International publication number: WO 2016/174037

(56) References cited:
- EP-A1- 2 204 277
- EP-A1- 2 243 623
- WO-A1-2009/142482
- CN-U- 203 665 975
- DE-A1-102006 018 508
- JP-A- 2011 230 414
- US-A- 2 409 974

## Description

### Technical Field of the Invention

The present invention refers in general to the building of tyres and, in particular, to a drum apparatus for building tyres and some of its components.

### Background

As is well known, the building of a tyre requires various steps of assembly for the different tyre components: inner liners, carcass plies, metallic rings, sidewall bands, tread bands, etc.

In particular, many types of tyre, so called of the turn-up type, require that elements such as the carcass ply/plies and/or the sidewall band(s) be folded towards the outside of the tyre, in order to be anchored to the metallic rings and thereby laid against the sidewall itself.

This folding and extending operation around the rings and on the sidewall of the tyre is typically performed with a drum apparatus which is provided with a movable arms mechanism that, during the assembly steps - before vulcanization - will correctly position these elements.

In particular, the term "sidewall band" of a sidewall of a tyre means a set of sheets, even of different rubbers, that forms the sidewall of the tyre.

The sidewall band of a sidewall of a tyre, in particular its end portion that is intended to be extended onto the sidewall of the tyre, is normally made of a particularly soft rubbery material, precisely to facilitate its adhesion to the sidewall of the tyre.

It is however possible that during these steps, the band during the setting step, before the arms mechanism has been able to position it correctly, will assume irregular positions due to unwanted folds in the rubber itself and will ultimately interfere with the arms themselves of the mechanism. The softness of the rubber of which the band is made facilitates this folding-in on itself and, further, the rubber can adhere to the metal of the arms with consequent positioning irregularities or even breakage during the operation of the arms mechanism. In these cases, the result is obviously a defective product which certainly needs to be discarded.

JP2011230414 discloses an apparatus for manufacturing a pneumatic tire of which the bead part is enhanced in structural durability. The apparatus comprises a plurality of shaking arms which include a plurality of the shakable arm bodies provided in the circumferential direction of the molding drum and carcass ply pressing rollers.

EP2204277 discloses a device for folding the body ply capable of turning up both width-end portions of a body ply by an even pressing force wherein a plurality of arm components is circumferentially arranged to be movable in the axial direction of an operating shaft.

DE102006018508 discloses an apparatus for turning up a tire structure member on a tire building drum with a roller lever wherein, spaced apart by spacing means the roller is substantially exclusively in contact with the tire structure member part to be assembled.

EP2243623 discloses a folding mechanism including two folding rollers, which are fitted in a swingable manner to a folding finger so as to hold deviated positions of a carcass band in a circumferential direction and in a meridian direction.

### Summary of the Invention

The technical problem addressed and solved by the present invention is therefore to provide an arm for an arms mechanism of a drum for building tyres that minimizes the possibility of contact with the rubber of the sidewall bands and/or of the carcass plies during the positioning step.

This is achieved by means of an arm as defined in independent claim 1.

A further object of the present invention is an arms mechanism as defined in dependent claim 12.

Yet another object of the present invention is a drum for building tyres as defined in dependent claim 13.

Further characteristics of the present invention are defined in the corresponding dependent claims.

### Brief Description of the Figures

The advantages, together with the characteristics and the way of usage of the present invention, will become clear from the following detailed description of its preferred embodiments given purely by way of non-limiting example.

Reference will be made to the figures of the accompanying drawings, in which:
- Figures 1A and 1B schematically illustrate the typical defect of the prior art apparatus;
- Figure 2 is a side view of an arm according to the present invention;
- Figure 3 is a perspective view of the arm in figure 2;
- Figure 4 is a top view of a portion of the arm in figure 2;
- Figure 5 is a side view of a portion of the arm in figure 2;
- Figures 6 and 7 sequentially illustrate the operation of an arm according to the present invention; and
- Figure 8 is a schematic view of a drum apparatus for building tyres according to the present invention, comprising two arms mechanisms according to the present invention.

### Detailed Description of Embodiments of the Invention

Some embodiments of the present invention will be described below, making reference to the above figures.

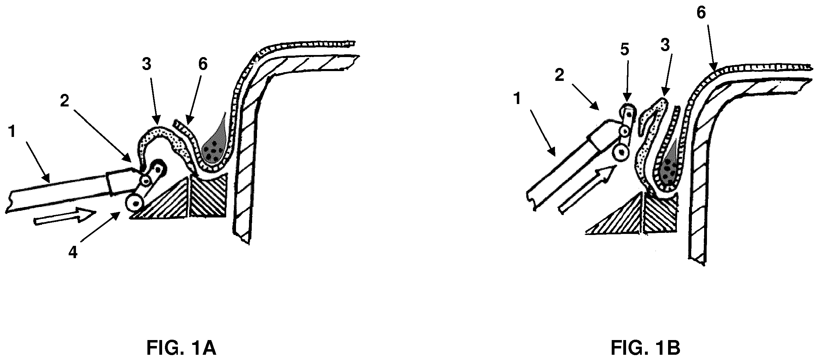

With initial reference to figures 1A and 1B, these schematically illustrate the operativity of a prior art apparatus in which the defect described above is highlighted.

In particular, figure 1A is a view of an arms mechanism. For simplicity, the mechanism is seen in section, showing only one arm. It is to be understood that the mechanism comprises a plurality of arms, mounted in such a way as to form a substantially cylindrical body. Each arm 1, during the operation of the mechanism is moved in such a way that its folding end 2 follows the profile of the tyre extending the sidewall band 3 and/or the carcass plies 6 along the sidewall of the tyre itself.

Figure 1A highlights the way in which an edge of a sidewall band 3, for example the outermost one, could - at least under certain circumstances - come into contact with the arm 1 itself, or else with the roller carrier assembly 4. Such contact can easily lead to situations such as the one shown in figure 1B, where the edge of the sidewall band 3 then folds itself under the rollers assuming an unwanted position and unwanted creases along the sidewall of the tyre. This can also occur because the edge of the band 3 comes into contact with the roller 5, which, due to its clockwise direction of rotation during operation, promotes the abnormal folding of the band 3 upon itself by dragging it.

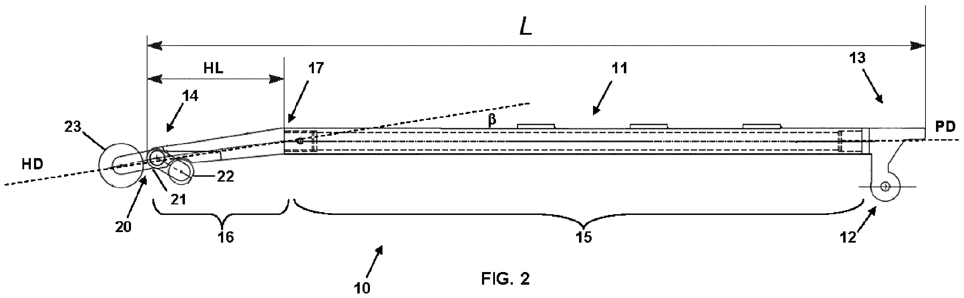

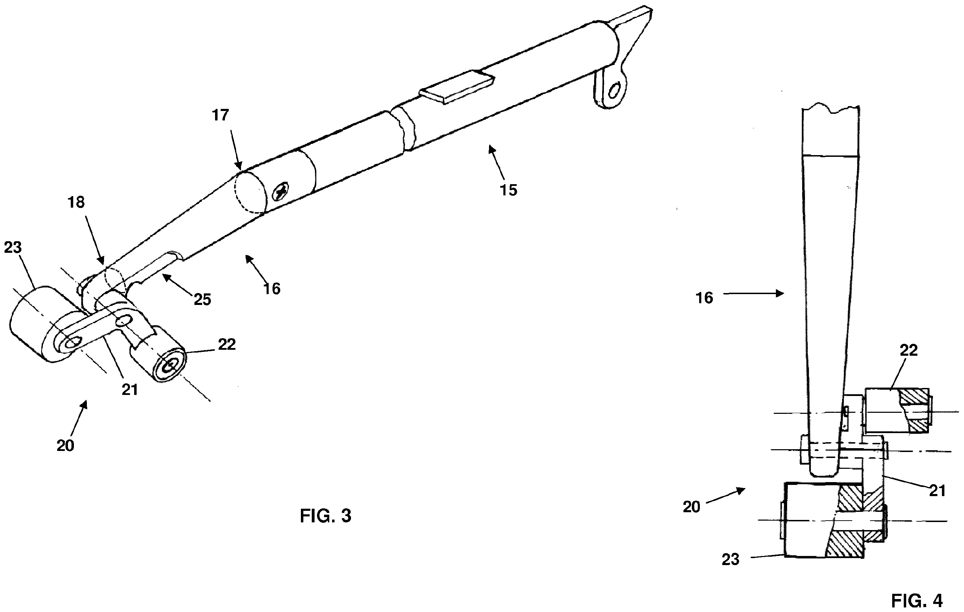

The subsequent figure 2 is a side view of a folding arm 10 according to the present invention, while figure 3 is a perspective view of said arm.

Firstly, the arm 10 comprises a rod 11 of length L that has pivoting connection means 12 to a connection end 13 thereof.

The length L of the rod is predetermined by and depends largely on the size of the arms mechanism upon which the arm is mounted and then ultimately on the size of the drum for building tyres upon which the mechanism is mounted.

This length L will therefore vary according to the type and size of the tyre that is to be built.

It should however be understood that this length L is not decisive for the purposes of the present invention, in fact, as will become clear below, the same principle can be applied to arms of differing lengths.

A folding assembly 20, which comprises a support 21 and more than one folding roller 22, 23 idle mounted on said support 21, is pivotally connected at a head end 14 of the rod 11. Preferably the support 21 has a chevron-like shape in its front view and preferably the pivotal connection of the support 21 is provided at the substantially central part thereof. In a preferred embodiment the two arms of the chevron-like support 21 have different lengths. Preferably when the support 21 is pivotally connected to the head end 14 of the rod 11 the shorter arm of the chevron-like support 21 is disposed closer to the head end 14 and the rod 11 and the longer arm of the chevron-like support 21 is reaching away from the head end 14 of the rod 11. The support 21 can be made of metal, such as steel.

As is known, the rollers have the task of sliding during operation along the sidewall of the tyre, while extending the carcass ply 3. These are typically made of nylon and/or steel.

The rod 11 of the arm 10 has a main portion 15 having a linear longitudinal development along a first development line PD.

In addition, at the head end 14, the rod 11 comprises a head portion 16 having a linear longitudinal development along a second development line HD.

The main portion 15 and the head portion 16 fit together at an interface section 17.

According to the present invention, the configuration of the head portion 16 and its orientation with respect to the main portion 15 of the rod 11, is such that, during use, the probability of the edge of the sidewall band 3 coming into contact with the upper part of the arm and/or with one of the folding rollers is minimized or even zeroed.

This is achieved in particular by having such a second development line HD inclined by an inclination angle β that is greater than zero with respect to the first development line PD.

The subsequent figure 3 is a perspective view of the arm 10, while figure 4 is a view from above of a portion of the arm itself. Figure 4 shows in detail the particular of the folding assembly 20 comprising the support 21 upon which the folding rollers 22, 23 are idle mounted.

With reference to figure 3, while the main portion 15 can be considered to be substantially cylindrical, advantageously, the head portion 16 is such that it has a section area 18 at the head end 14, which is less than the area of said interface section 17.

The section area 18 at said head end 16 is less than or equal to 90% of the area of the interface section 17.

This comprehensively leads to a lower position of the head portion of the arm with respect to the edge of the carcass ply, thereby making it impossible or substantially difficult for the edge to touch the metal of the arm or the folding roller.

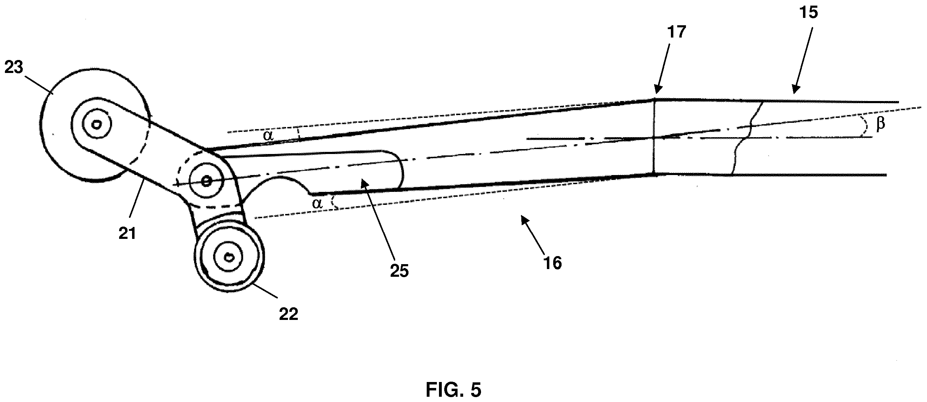

With reference to figure 5, the inclination angle β, between the second development line HD and the first development line PD, is preferably greater than 0° and smaller than 40°.

Even more preferably, the inclination angle β is greater than 0° and smaller than 10°.

According to one embodiment of the present invention, the head portion 16 has a tapering towards its head end. The shape of the head portion 16 can be generically referred to as conical or frustoconical, even though with a base that is inclined with respect to the main axis of the cone.

In general, the tapering of the head portion 16 can be defined by means of a tapering angle α, as shown in figure 5, with respect to a hypothetical cylindrical surface having a base corresponding to the interface section 17.

According to an embodiment of the present invention, this tapering angle α is between 0.5° and 3°.

Preferably, the tapering angle α is between 0.9° and 1.5° and, according to a preferred embodiment, the tapering angle α is equal to 1.2°.

From a dimensional point of view, as has been mentioned, the length L of the rod 11 is a function of the dimensioning of the apparatus for which the arm is intended.

However, for the purposes of the present invention, it would be preferable if the head portion 16 had a length HL expressed as a function of the overall length L of the rod.

According to the preferred embodiment of the invention, the length HL of the head portion is likely to be between 20% and 50% of the length L of the rod 11.

The configuration of the arm 10, in particular of its head portion 16, is therefore such to minimize the possibility that the edge of the carcass ply will come into contact with the arm itself or with the rollers during use of the apparatus.

In any case, advantageously, it can also be provided that the head portion 16 includes a surface coating made of anti-stick material.

For example, said anti-stick treatment can be made with SR41D by Smaltiriva ®.

According to a further embodiment, the head portion 16 may also comprise a stop region 25 for the folding assembly 20.

The stop region 25, made, for example, in the form of a recess within the head portion 16, is configured in such a way as to constitute a stopping element for the folding assembly 20, for example for the roller 22 or for the support 21, in order to prevent a complete rotation of the assembly itself around its axis of rotation during operation of the apparatus. In a preferred embodiment the stop region 25 is configured is such a way as to constitute a stopping element for the folding assembly 20, preferably for the short arm of the chevron-like support 21 or for the roller 22 idle mounted on the short arm of the chevron-like support 21.

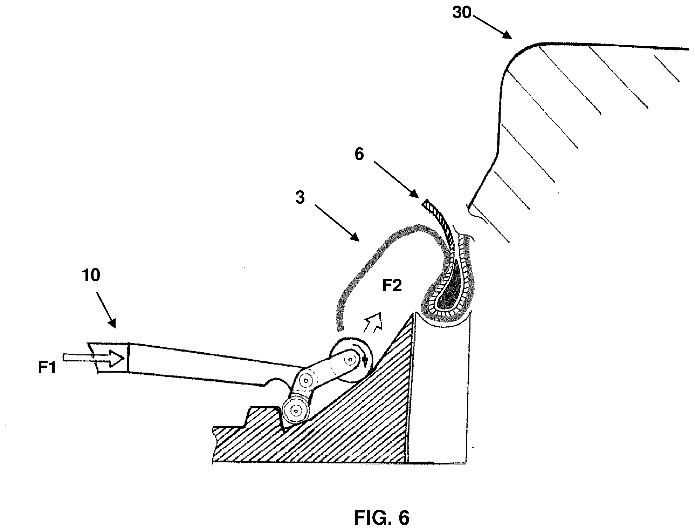

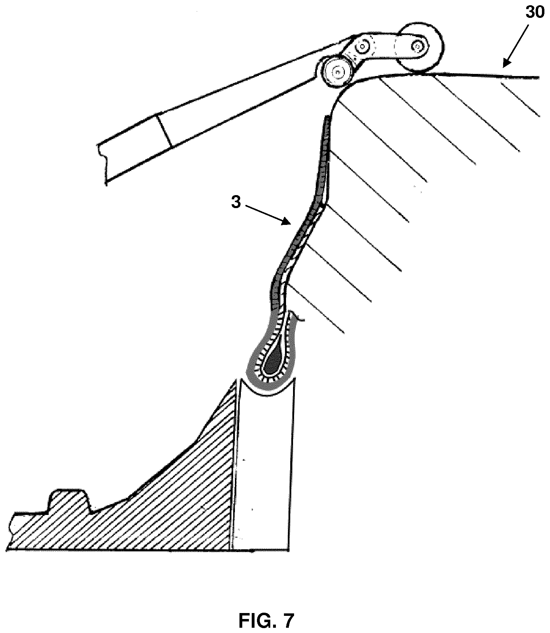

The subsequent figures 6 and 7 show, respectively, the initial and the final processing steps.

In particular, figure 6 shows an arm 10 according to the present invention, within an arms mechanism mounted on a drum for building tyres, in a resting position, i.e. before being activated for the positioning of the sidewall band 3 of the tyre 30.

When the apparatus is activated, the arm 10 is pushed forward (according to the arrow F1) and, consequently, the head portion rises up towards the sidewall of the tyre (as indicated by the arrow F2).

In this situation, the folding assembly can pass below the edge of the band 3 and then position it on the sidewall while avoiding unwanted folding. The subsequent figure 7 shows the final processing step.

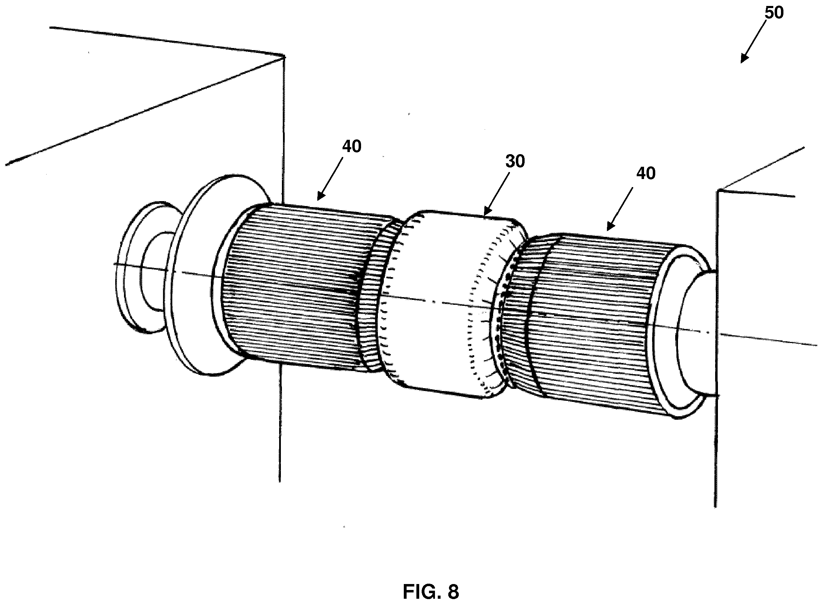

Finally, figure 8 schematically shows a drum apparatus 50 for building tyres comprising two arms mechanisms 40, each of which has a plurality of arms according to the present invention.

The invention has heretofore been described with reference to its preferred embodiments. It is intended that each of the technical solutions implemented in the preferred embodiments described herein by way of example can advantageously be combined in different ways between them, in order to give form to other embodiments, which belong to the same inventive nucleus and that all fall within the scope of protection afforded by the claims recited hereinafter.

## Claims

1. Folding arm (10) for a sidewall band (3) of a tyre, comprising:
- a rod (1) having pivoting connection means (12) at a connection end (13); and
- a folding assembly (20) comprising a support (21) and more than one folding roller (22, 23) idle mounted on said support (21), wherein the support (21) has a chevron-like shape and the assembly being connected to an head end (14) of said rod (11),
wherein said rod (11) has a main portion (15) having a linear longitudinal development along a first development line (PD) and, at said head end (14), an head portion (16) having a linear longitudinal development along a second development line (HD), wherein said second development line (HD) is inclined of an inclination angle (β) greater than zero with respect to said first development line (PD),
said main portion (15) and said head portion (16) fitting together at an interface section (17),
wherein said head portion (16) has a section area (18) at said head end (14), less than the area of said interface section (17), wherein said folding assembly (20) is rotably connected to said head end (14) of said rod (11) and wherein the section area (18) at said head end (14) is lower or equal to 90% of the area of the interface section (17).

2. Folding arm (10) according to claim 1, wherein said main portion (15) is cylindrical.

3. Folding arm (1) according to claim 1 or 2, wherein said inclination angle (β) is greater than 0° and smaller than 40°.

4. Folding arm (10) according to claim 3, wherein said inclination angle (β) is greater than 0° and smaller than 10°.

5. Folding arm (10) according to anyone of the claims 1 to 4, wherein said head portion (16) is conical or frustoconical.

6. Folding arm (10) according to anyone of the claims 1 to 5, wherein said head portion (16) has a tapering towards its head end (14) and a corresponding tapering angle (α).

7. Folding arm (10) according to claim 6, wherein said tapering angle (α) is between 0.5° and 3°.

8. Folding arm (10) according to claim 7, wherein said tapering angle (α) is between 0.9° and 1.5°.

9. Folding arm (10) according to anyone of the claims 1 to 8, wherein said rod (11) has a length (L) and said head portion (16) has a length (HD) between 20% and 50% of the length (L) of said rod (11).

10. Folding arm (10) according to anyone of the claims 1 a 9, wherein said head portion (16) comprises a surface coating made of anti-stick material.

11. Folding arm (10) according to anyone of the claims 1 to 10, wherein said head portion (16) comprises a stop region (25) for the folding assembly (20).

12. Arms mechanism (40) comprising a plurality of folding arms (10) according to anyone of the claims 1 to 11.

13. Drum apparatus (50) for building tyres, comprising one or more arms mechanisms (40) according to claim 12.

## Patentansprüche

1. Klapparm (10) für ein Seitenwandband (3) eines Reifens, umfassend:
- einen Stab (1), der an einem Verbindungsende (13) schwenkbare Verbindungsmittel (12) aufweist; und
- eine Klappanordnung (20), die einen Träger (21) und mehr als eine Klapprolle (22, 23) umfasst, die im Leerlauf auf dem Träger (21) angebracht ist, wobei der Träger (21) eine winkelartige Form aufweist und die Anordnung mit einem Kopfende (14) des Stabs (11) verbunden ist,
wobei der Stab (11) einen Hauptabschnitt (15) mit einer linearen Längsentwicklung entlang einer ersten Entwicklungslinie (PD) und an dem Kopfende (14) einen Kopfabschnitt (16) mit einer linearen Längsentwicklung entlang einer zweiten Entwicklungslinie (HD) aufweist, wobei die zweite Entwicklungslinie (HD) um einen Neigungswinkel (β) größer als Null in Bezug auf die erste Entwicklungslinie (PD) geneigt ist,
wobei der Hauptabschnitt (15) und der Kopfabschnitt (16) an einem Schnittstellenabschnitt (17) zusammenpassen,
wobei der Kopfabschnitt (16) am Kopfende (14) eine Querschnittsfläche (18) aufweist, die kleiner ist als die Fläche des Schnittstellenabschnitts (17), wobei die Klappanordnung (20) drehbar mit dem Kopfende (14) des Stabs (11) verbunden ist und wobei die Querschnittsfläche (18) am Kopfende (14) kleiner oder gleich 90 % der Fläche des Schnittstellenabschnitts (17) ist.

2. Klapparm (10) nach Anspruch 1, wobei der Hauptabschnitt (15) zylindrisch ist.

3. Klapparm (1) nach Anspruch 1 oder 2, wobei der Neigungswinkel (β) größer als 0° und kleiner als 40° ist.

4. Klapparm (10) nach Anspruch 3, wobei der Neigungswinkel (β) größer als 0° und kleiner als 10° ist.

5. Klapparm (10) nach einem der Ansprüche 1 bis 4, wobei der Kopfabschnitt (16) konisch oder kegelstumpfförmig ist.

6. Klapparm (10) nach einem der Ansprüche 1 bis 5, wobei der Kopfabschnitt (16) eine Verjüngung zu seinem Kopfende (14) hin und einen entsprechenden Verjüngungswinkel (α) aufweist.

7. Klapparm (10) nach Anspruch 6, wobei der Verjüngungswinkel (α) zwischen 0,5° und 3° liegt.

8. Klapparm (10) nach Anspruch 7, wobei der Verjüngungswinkel (α) zwischen 0,9° und 1,5° liegt.

9. Klapparm (10) nach einem der Ansprüche 1 bis 8, wobei der Stab (11) eine Länge (L) aufweist und der Kopfabschnitt (16) eine Länge (HD) zwischen 20 % und 50 % der Länge (L) des Stabes (11) aufweist.

10. Klapparm (10) nach einem der Ansprüche 1 a 9, wobei der Kopfabschnitt (16) eine Oberflächenbeschichtung aus einem Antihaftmaterial umfasst.

11. Klapparm (10) nach einem der Ansprüche 1 bis 10, wobei der Kopfabschnitt (16) einen Anschlagbereich (25) für die Klappanordnung (20) umfasst.

12. Armmechanismus (40), der eine Vielzahl von Klapparmen (10) nach einem der Ansprüche 1 bis 11 umfasst.

13. Trommelvorrichtung (50) zum Bau von Reifen, die einen oder mehrere Armmechanismen (40) nach Anspruch 12 umfasst.

## Revendications

1. Bras de pliage (10) pour une bande de flanc (3) d'un pneu, comprenant :
- une tige (1) ayant un moyen de raccordement pivotant (12) au niveau d'une extrémité de raccordement (13) ; et
- un ensemble de pliage (20) comprenant un support (21) et plus d'un rouleau de pliage (22, 23) monté à vide sur ledit support (21), dans lequel le support (21) a une forme de type chevron et l'ensemble est raccordé à une extrémité de tête (14) de ladite tige (11),
dans lequel ladite tige (11) a une partie principale (15) ayant un développement longitudinal linéaire le long d'une première ligne de développement (PD) et, au niveau de ladite extrémité de tête (14), une partie de tête (16) ayant un développement longitudinal linéaire le long d'une deuxième ligne de développement (HD), dans lequel ladite deuxième ligne de développement (HD) est inclinée d'un angle d'inclinaison (β) supérieur à zéro par rapport à ladite première ligne de développement (PD),
ladite partie principale (15) et ladite partie de tête (16) s'emboîtant au niveau d'une section d'interface (17),
dans lequel ladite partie de tête (16) a une aire de section (18) au niveau de ladite extrémité de tête (14), inférieure à l'aire de ladite section d'interface (17), dans lequel ledit ensemble de pliage (20) est raccordé de façon rotative à ladite extrémité de tête (14) de ladite tige (11) et dans lequel l'aire de section (18) au niveau de ladite extrémité de tête (14) est inférieure ou égale à 90 % de l'aire de la section d'interface (17).

2. Bras de pliage (10) selon la revendication 1, dans lequel ladite partie principale (15) est cylindrique.

3. Bras de pliage (1) selon la revendication 1 ou 2, dans lequel ledit angle d'inclinaison (β) est supérieur à 0° et inférieur à 40°.

4. Bras de pliage (10) selon la revendication 3, dans lequel ledit angle d'inclinaison (β) est supérieur à 0° et inférieur à 10°.

5. Bras de pliage (10) selon l'une quelconque des revendications 1 à 4, dans lequel ladite partie de tête (16) est conique ou tronconique.

6. Bras de pliage (10) selon l'une quelconque des revendications 1 à 5, dans lequel ladite partie de tête (16) a un effilement en direction de son extrémité de tête (14) et un angle d'effilement correspondant (α).

7. Bras de pliage (10) selon la revendication 6, dans lequel ledit angle d'effilement (α) est compris entre 0,5° et 3°.

8. Bras de pliage (10) selon la revendication 7, dans lequel ledit angle d'effilement (α) est compris entre 0,9° et 1,5°.

9. Bras de pliage (10) selon l'une quelconque des revendications 1 à 8, dans lequel ladite tige (11) a une longueur (L) et ladite partie de tête (16) a une longueur (HD) entre 20 % et 50 % de la longueur (L) de ladite tige (11).

10. Bras de pliage (10) selon l'une quelconque des revendications 1 à 9, dans lequel ladite partie de tête (16) comprend un revêtement de surface constitué d'un matériau antiadhésif.

11. Bras de pliage (10) selon l'une quelconque des revendications 1 à 10, dans lequel ladite partie de tête (16) comprend une région de butée (25) pour l'ensemble de pliage (20).

12. Mécanisme de bras (40) comprenant une pluralité de bras de pliage (10) selon l'une quelconque des revendications 1 à 11.

13. Appareil à tambour (50) pour fabriquer des pneus, comprenant un ou plusieurs mécanismes de bras (40) selon la revendication 12.
